# EUROPÄISCHE PATENTSCHRIFT

(11) **EP 0 898 423 B1**
(45) Veröffentlichungstag und Bekanntmachung des Hinweises auf die Patenterteilung: **12.03.2003**
(21) Anmeldenummer: 98115121.0
(22) Anmeldetag: 12.08.1998
(51) Int. Cl.: H04N 7/088, H04N 5/445

(54) **Verfahren und Schaltungsanordnung zur Auswahl von Fernsehprogrammen anhand von Videotextdaten**
Method and apparatus for selecting television programmes using videotext data
Méthode et dispositif pour la sélection de programmes de télévision au moyen de données vidéotexte

(30) Priorität: 21.08.1997 DE 19736385
(43) Veröffentlichungstag der Anmeldung: 24.02.1999
(73) Patentinhaber: GRUNDIG Aktiengesellschaft, 90471 Nürnberg (DE)
(72) Erfinder: Bayer, Anton c/o Grundig AG, 90762 Fuerth (DE); Will, Hans-Werner c/o Grundig AG, 90762 Fuerth (DE)

(56) Entgegenhaltungen:
- WO-A-96/07270
- DE-A- 4 438 412
- DE-C- 4 405 020
- US-A- 5 343 300
- WASS A ET AL: "COURTESY OF THE BLANKING INTERVAL: AN ELECTRONIC PROGRAM GUIDE STRAIGHT TO YOUR HOME" COMPONENTS,DE,SIEMENS AKTIENGESELLSCHAFT. MUNCHEN, Bd. 31, Nr. 5, 1. Januar 1996 (1996-01-01), Seiten 24-25, XP000632839 ISSN: 0945-1137

## Beschreibung

Die Erfindung betrifft ein Verfahren und eine Schaltungsanordung zur Auswahl von Fernsehprogrammen anhand von Videotextdaten.

In Fernsehgeräten sind derzeit Videotextdecoder Stand der Technik. Im weiteren ist es bekannt auf einem Fernsehgerät mindestens zwei Fernsehbilder zugleich anzuzeigen. Im weiteren ist das Nextview-Format für Videotextdaten bekannt.
Im Videotext wird für verschiedene Fernsehsender das zugehörige Fernsehprogramm für die nächsten Tage angezeigt. Der Nutzer dieser Dienste kann somit zu jedem Sender Informationen erhalten, welcher Fernsehsender, welche Fernsehprogramme, zu weicher Zeit ausstrahlt.

Aus WO 96/07270 ist ein Verfahren und eine Vorrichtung zur Anzeige von Fernsehprogrammen und zugehörigen Textinformationen bekannt. Hierbei werden die Videotextdaten zusammen mit dem Signal eines Fernsehsenders übertragen. Die Videotextdaten beinhalten Informationen zum aktuellen Fernsehprogramm in verschiednen Fernsehsendern, wobei die Videotextdaten von einer Fernsehempfangseinheit zusammen mit dem Signal eines Fernsehsender empfangen werden. Die ausgewerteten Videotextdaten werden auf einem Teilbereich einer Anzeigeeinheit dargestellt und sind über eine Bedieneinheit auswählbar. Das zu den angewählten Daten zugehörige Fernsehprogramm wird in einem Teilbereich der Fernsehempfangseinheit dargestellt.

Aus dem Artikel Courtesy of the blanking interval: "An electronic program guide straight to your home", von Alexander Wass und Manfred Schmidt, aus Components XXXI, 1996 No. 5 ist das Nextview-Format offenbart.

Aufgabe der Erfindung ist es einen direkten bezug zwischen den Videotextdaten und einem zugehörigen Fernsehprogramm zu schaffen, indem zu den ausgewählten Videotextdaten das zugehöriges Fernsehbild zeitgleich angezeigt wird.

Diese Aufgabe wird durch ein Verfahren mit den im Anspruch 1 angegebenen Merkmalen gelöst. Vorteihafte Ausgestaltungen und Weiterbildungen der Erfindung sind in den Ansprüchen 2-8 angegeben. Die Ansprüche 9-15 betreffen eine Schaltungsanordung.

Gemäß dem erfindungsgemäßen Verfahren werden Videotextdaten, welche Informationen zu verschiedenen Fernsehprogrammen beinhalten, ausgewertet und auf einem Teilbereich des Bildschirmes dargestellt. Im weiteren werden über eine Auswahlmöglichkeit diese Daten angewählt und ein zugehöriges Fernsehbild in einem zweiten Teilbereich des Bildschirmes angezeigt.

Die Vorteile der Erfindung liegen darin, daß der Benutzer anhand der Videotextdaten und dem zugehörigen Fernsehbild mit Ton, sich schnell eine Übersicht über die aktuellen Fernsehprogramme der verschiedenen zu empfangenden Fernsehsender verschaffen kann. Dies ist insoweit besonders vorteilhaft, da die Anzahl der Fernsehsender immer weiter zunimmt und ein Zuschauer nicht mehr den Überblick über sämtliche Fernsehprogramme hat. Durch die Erfindung ist es möglich, schnell einen Eindruck über sämtliche aktuell zu empfangenden Fernsehsender und deren Programme zu erhalten, da zugleich der Titel der Sendung, als auch das Fernsehbild mit Ton für den Benutzer dargestellt wird.

Zu verschiedenen Fernsehsendern wird Videotext ausgestrahlt. Im Videotext werden an speziell gekennzeichneten oder bekannten Stellen Daten über die Fernsehprogramme verschiedener Fersehsender eingebracht. Diese Daten bestehen zumeist aus dem Fernsehsenderkennung, wobei die Kennung zumeist in Form des Fersehsendemamens erfolgt, dem Fernsehsenderprogramm mit Datum der Ausstrahlung, Startzeit und Endzeit der Sendung.
Diese Videotextdaten werden zusammen mit dem zugehörigen Fernsehsendersignal von einer Fernsehempfangseinheit eines Fernsehgerätes empfangen. Im weiteren werden die Videotextdaten ausgewertet und nur die Daten, die von Interesse sind - die Daten zu den verschiedenen Fernsehsendern - werden aus dem kontinuierlichen Datenstrom der Videotextdaten entnommen und gespeichert. Diese Videotextdaten werden dann auf einer Anzeigeeinheit für einen Benutzer sichtbar und verständlich, in einem definierten Bereich der Anzeigeeinheit, sortiert nach Programmanfangszeiten und/oder Fernsehsenderkennung, dargestellt. Über eine Bedieneinheit werden die dargestellten Videotextdaten ausgewählt bzw. angewählt. Wird nun ein spezielles Fernsehprogramm eines auf der Anzeigeeinheit dargestellten Fernsehsenders über die Bedieneinheit selektiert, so werden die selektierten Informationen ausgewertet. Insbesondere wird der Name des Fernsehsenders aus den Daten ermittelt. Der Name des Fernsehsenders wird in ASCII-Text umgewandelt. Im weiteren ist ein Programmspeicher vorhanden, in welchem zu jedem empfangbaren Fernsehsender der zugehörige Sendekanal und der Name des Fernsehsenders im ASCII-Format gespeichert ist. In diesem Programmspeicher wird nun der Name des selektierten Fernsehsenders gesucht.

Wird dieser Fernsehsender im Programmspeicher gefunden und ist dieser Fernsehsender zu empfangen, wird die Empfangseinheit auf den zugehörigen Sendekanal umgeschaltet und das hierdurch empfangenen Fernsehbild wird in einem weiteren Teilbereich der Anzeigeeinheit dargestellt.Ebenso wird der zugehörige Ton über eine akustische Einheit ausgegeben.

Die Teilbereiche der Anzeigeeinheit sind derart gewählt, daß sich die Teilbereiche nicht überlagern, sondern stets getrennt dargestellt werden. Zur Darstellung der Videotextdaten hat es sich als vorteilhaft erwiesen den Teilbereich zur Darstellung auf eine Breite von 40 darstellbaren Zeichen festzulegen. Für die Darstellung der Fernsehsenderprogrammdaten werden in diesem Teilbereich der Anzeigeeinheit jeweils zwei Zeilen verwendet. Wird nun eine Vielzahl von Fernsehsenderprogrammdaten dargestellt, so daß der Teilbereich der Anzeigeeinheit nicht zur Darstellung ausreicht, wird nur ein Ausschnitt dargestellt. Die weiteren Daten werden im Speicher gehalten. Um dies anzuzeigen wird neben diesem Teilbereich eine vertikale Laufleiste dargestellt. Diese vertikale Laufleiste zeigt dem Benutzer qualitativ an, an welcher Stelle im Teilbereich er sich befindet.

Im weiteren ist vorgesehen, daß Teilbereiche 5 und 7 der Anzeigeeinheit vergrößert und/oder verkleinert werden können, je nach Darstellungswunsch eines Benutzers. Diese Funktion wird über die Bedieneinheit eingegeben. Wird der Teilbereich 7 der Anzeigeeinheit vergrößert oder verkleinert, paßt die Steuereinheit 1 automatisch die Darstellungsgröße des Auswahlbalkens 9, des Teilbereichs 6 mit der Bildlaufleise und dem zugehörigen Symbol 10, an.

Im weiteren ist vorgesehen, daß die Videotextdaten im Speicher turnusmäßig aktualisiert werden, damit stets die aktuellen Fernsehsenderprogrammdaten vorhanden sind und etwaige Programmänderungen erfaßt werden.

Die Merkmale der Erfindung werden im folgenden an einem exemplarischen Ausführungsbeispiel anhand der Zeichnungen erläutert. Das Ausführungsbeispiel ist keine erschöpfende Aufzählung der erfindungsgemäßen Ausgestaltungsmöglichkeiten, sondern hat nur beispielhaften Charakter.

Es zeigt:
- FIG ein Blockschaltbild eines Ausführungsbeispiels der Schaltungsanordnung.

Die Schaltungsanordnung besteht aus einer Steuereinheit 1, einer Empfängereinheit 2, einer Speichereinheit 3, einer Bedieneinheit 8, einem Programmspeicher 11, einer akustischen Ausgabeeinheit 12 und einer Anzeigeeinheit 4, auf der die Teilbereiche 5, 6, 7 vorliegen. Die Empfängereinheit 2 empfängt Videotextdaten,die zusammen mit einem Fernsehsendersignal ausgestahlt werden. Die Steuereinheit 1 trennt die Videotextdaten aus dem Fernsehsendersignal ab, wertet diese Daten aus und speichert sie in der Speichereinheit 3.
Anschließend zeigt die Steuereinheit 1 diejenigen Teile der Videotextdaten, die Informationen über verschiedene Fernsehsender und deren Fernsehprogrammen enthält, im Teilbereich 7 der Anzeigeeinheit 4 an. Die Anzeige erfolgt in sortierter Form, d.h. alphabetisch sortiert nach den Namen der Fernsehsender oder nach Anfangszeiten der Fernsehprogramme der Fernsehsender. Zur Darstellung im Teilbereich 7 wird für jeden dargestellten Fernsehsender mindestens eine Zeile, eine physikalische Darstellungszeile, verwendet.
Im Teilbereich 7 der Anzeigeeinheit 4 erzeugt die Steuereinheit 1 einen Auswahlbalken 9. Dieser Auswahlbalken 9 fokusiert jeweils einen im Teilbereich 7 dargestelleten Fernsehsender und wird mittels der Bedieneinheit 8 vertikal senderweise verschoben. Die Steuereinheit 1 ermittelt die Bezeichnung eines Fernsehsenders, der durch den Auswahlbalkens fokussiert ist, aus den Videotextdaten in der Speichereinheit 3. Anschließend sucht die Steuereinheit 1 im Programmspeicher 11 nach der Bezeichnung dieses Fernsehsenders. Im Programmspeicher 11 sind zu jedem empfangbaren Fernsehsender die zugehörigen Empfangskanaldaten gespeichert. Ist der gesuchte Fernsehsender im Programmspeicher 11 vorhanden, liest die Steuereinheit 1 den zu diesem Fernsehsender zugehörigen Sendekanal aus dem Programmspeicher 11 aus und steuert die Empfangseinheit 2 an, damit diese auf diesen Sendekanal umschaltet. Die Steuereinheit 1 stellt das nun von der Empfangseinheit 2 empfangene Fernsehsignal im Teilbereich 5 der Anzeigeeinheit 4 dar und gibt den zugehörigen Ton über die akustische Einheit 12 aus.

Die Steuereinheit 1 ist derart ausgestaltet, daß sie selbständig erkennt, wenn Videotextdaten im Nextview-Format vorliegen. Nur diese Videotextdaten verarbeitet die Steuereinheit 1 weiter.

Im Teilbereich 6 der Anzeigeeinheit 4 stellt die Steuereinheit 1 eine Bildlaufleiste dar. Zusätzlich stellt sie auf der Bildlaufleiste ein Symbol 10 dar, welches anzeigt, an welcher Stelle sich der Auswahlbalken 9 im Teilbereich 7 der Anzeigeeinheit 4 befindet, bezogen auf den gesamten dargestellten Inhalt im Teilbereich 7. Hierdurch ist es einem Benutzer möglich, schnell zu erkennen, an welcher Stelle im Teilbereich 7 sich der Auswahlbalken 9 befindet.

Als besonders vorteilhaft hat sich erwiesen, die Bedieneinheit 8 in Form einer Fernbedienung zu realisieren. Vorteilhaft hat sich im weiteren auch erwiesen, daß die Steuereinheit 1 zusätzlich zu den Videotextdaten den Zeitpunkt der Speicherung in der Speichereinheit 3 speichert.

In einer vorteilhaften Ausgestaltung der Erfindung ist vorgesehen, daß die Teilbereiche 5 und 7 der Anzeigeeinheit 4 mittels der Bedieneinheit 8 vergrößert und/oder verkleinert werden können.

In der Erfindung ist vorgesehen, daß die Steuereinheit 1 die in der Speichereinheit 3 gespeicherten Videotextdaten turnusmäßig durchsucht. Im weiteren ist eine weitere Empfangseinheit vorgesehen mittels derer die Steuereinheit 1 den gesamten Empfangsbereich, einen Teil des Empfangsbereiches nach Fernsehsendern mit Videotextdaten im Nextview-Format durchsucht oder einen bekannten Fernsehsender, welcher Videotextdaten im Nextview-Format sendet, ständig überwacht und die Daten in der Speichereinheit 3 anhand dieser Videotextdaten aktualisiert.

Im weiteren ist vorgesehen den Teilbereich 5 der Anzeigeeinheit mit einem Symbol, beispielsweise mit einem Symbol eines Fernsehsenders zu füllen, wenn der über den Auswahlbalken 9 fokusierte Fernsehsender nicht empfangen werden kann.

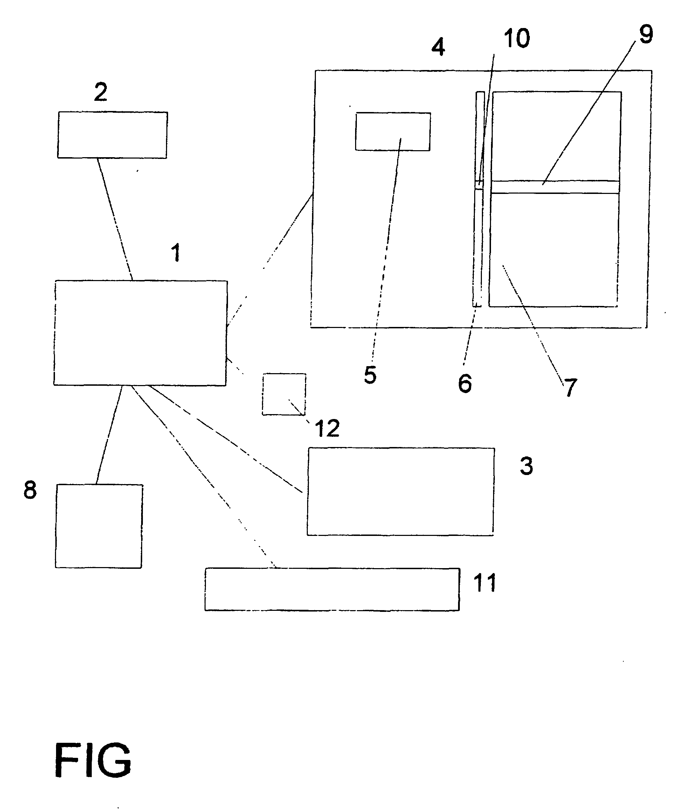

## Patentansprüche

1. Verfahren zur Auswahl von Fernsehprogrammen anhand von Videotextdaten, wobei
die Videotextdaten zusammen mit dem Fernsehsignal eines Fernsehsenders übertragen werden,
die Videotextdaten Informationen zu aktuellen Fernsehprogrammen verschiedener Fernsehsender beinhalten,
die Videotextdaten von einer Fernsehempfangseinheit zusammen mit dem Signal eines Fernsehsenders empfangen werden,
die Videotextdaten ausgewertet werden,
die ausgewerteten Videotextdaten gespeichert werden,
die gespeicherten Videotextdaten auf einem Teilbereich einer Anzeigeeinheit, nach Sendernamen sortiert, zeilenweise dargestellt werden,
die auf dem Teilbereich der Anzeigeeinheit dargestellten Daten über eine Bedieneinheit angewählt werden,
anhand eines generierten Auswahlbalkens auf der Anzeigeneinheit ein Fernsehsender anwählbar ist,
anhand eines über den Auswahlbalken gewählten Senders der Name dieses Senders aus den gespeicherten Videotextdaten ermittelt und in einem Programmspeicher nach diesen Namen des Fernsehsenders gesucht wird und, wenn dieser Name des Senders im Programmspeicher vorhanden ist, aus dem Programmspeicher die zu diesen Fernsehsender zugehörigen Sendekanaldaten ermittelt werden, welche in einer weiteren Speichereinheit gespeichert sind,
die Fernsehempfangseinheit auf diesen Fernsehkanal eingestellt wird, um diesen Fernsehsender zu empfangen, und das zu dem angewählten Namen des Senders zugehörige Fernsehprogramm in einem weiteren Teilbereich der Anzeigeeinheit dargestellt wird
zu den Videotextdaten der Zeitpunkt der Speicherung abgespeichert wird und die Daten in der Speichereinheit anhand der Videotextdaten aktualisiert werden,

2. Verfahren nach Anspruch 1,
**dadurch gekennzeichnet,**
**daß** die Videotextdaten im Nextview-Format und daß die Videotextdaten als eine Videotextseite, mit Unterseiten für mehrere Fernsehsender, übertragen werden.

3. Verfahren nach Anspruch 1 oder 2,
**dadurch gekennzeichnet,**
**daß** die Videotextdaten in einer Speichereinheit gespeichert werden.

4. Verfahren nach einem der Ansprüche 1 bis 3,
**dadurch gekennzeichnet,**
**daß** die Teilbereiche der Anzeigeeinheit zur Darstellung der Videotextdaten und zur Darstellung des Fernsehbildes sich nicht überlagern.

5. Verfahren nach einem der Ansprüche 1 bis 4,
**dadurch gekennzeichnet,**
**daß** zur Darstellung der Videotextdaten ein Teilbereich der Anzeigeeinheit mit einer Breite von 40 Zeichen verwendet wird.

6. Verfahren nach einem der Ansprüche 1 bis 5,
**dadurch gekennzeichnet,**
**daß** neben dem Teilbereich der Anzeigeeinheit, in welchem die Videotextdaten dargestellt werden, eine Laufleiste dargestellt wird.

7. Verfahren nach einem der Ansprüche 1 bis 6,
**dadurch gekennzeichnet,**
**daß** die Videotextdaten im Teilbereich der Anzeigeeinheit alphabetisch nach den Namen der Fernsehsender sortiert dargestellt werden, daß mindestens eine Zeile zur Darstellung eines Fernsehsenders verwendet wird.

8. Verfahren nach einem der Ansprüche 1 bis 7,
**dadurch gekennzeichnet,**
**daß** die Videotextdaten in der Speichereinheit tumusmäßig aktualisiert werden.

9. Schaltungsanordnung zur Auswahl von Fernsehprogrammen anhand von Videotextdaten mit einer Steuereinheit (1), einer Empfängereinheit (2), einer Speichereinheit (3), einer Bedieneinheit (8) und einer Anzeigeeinheit (4), welche Teilbereiche (5, 6, 7) aufweist, wobei
die Empfängereinheit (2) Videotextdaten empfängt, welche zusammen mit einem Fernsehsendersignal übertragen werden,
die Steuereinheit (1) die Videotextdaten auswertet und in der Speichereinheit (3) speichert,
die Steuereinheit (1) die Videotextdaten, die Informationen über verschiedene Fernsehsender enthalten, auf der Anzeigeeinheit (4) in einem Teilbereich (7), nach Sendern alphabetisch sortiert, darstellt und für jeden dargestellten Fernsehsender eine Zeile verwendet,
die Steuereinheit (1) in dem Teilbereich (7) der Anzeigeeinheit (4) einen Auswahlbalken (9) generiert, der jeweils eine Zeile des Teilbereichs (7) fokussiert,
der Auswahlbalken (9) über die Bedieneinheit (8) vertikal zeilenweise verschoben werden kann,
die Steuereinheit (1) den Namen eines Fernsehsenders, welcher mittels des Auswahlbalkens (9) fokussiert ist, aus den Videotextdaten der Speichereinheit (3) ermittelt und in einem Programmspeicher (11) nach dem Namen dieses Fernsehsenders sucht und, wenn dieser Fernsehsender im Programmspeicher (11) vorhanden ist, den zu diesem Sender zugehörigen Sendekanal aus dem Programmspeicher ausliest und die Steuereinheit (1) so daß die Empfangseinheit (2) ansteuert, diese auf diesen Sendekanal umschaltet, und die Steuereinheit (1) das nun von der Empfangseinheit (2) empfangene Fernsehsignal in einem zweiten Teilbereich (5) der Anzeigeeinheit (4) darstellt,
die Steuereinheit (1) in der Speichereinheit (3) zu den Videotextdaten den Speicherzeitpunkt speichert und die Steuereinheit (1) die Videotextdaten, welche empfangen werden, überwacht und in der Speichereinheit (3) kontinuierlich speichert.

10. Schaltungsanordnung nach Anspruch 9,
**dadurch gekennzeichnet,**
**daß** es sich bei den Videotextdaten um Videotextdaten im Nextview-Format handelt, daß die Steuereinheit (1) erkennt, wenn Videotextdaten im Nextview-Format vorliegen und nur diese Videotextdaten weiterverarbeitet.

11. Schaltungsanordnung nach Anspruch 9 oder 10,
**dadurch gekennzeichnet,**
**daß** die Speichereinheit (3) als RAM-Speicher und der Programmspeicher (11) als E²PROM realisiert ist.

12. Schaltungsanordnung nach einem der Ansprüche 9 bis 11,
**dadurch gekennzeichnet,**
**daß** im Teilbereich (6) der Anzeigeeinheit (4) eine Bildlaufleiste dargestellt ist, welche mittels eines Symbols (10) anzeigt, an welcher Stelle sich der Auswahlbalken (9) in einem dritten Teilbereich (7) der Anzeigeeinheit (4) befindet, bezogen auf den gesamten dargestellten Inhalt im Teilbereich (7).

13. Schaltungsanordnung nach einem der Ansprüche 9 bis 12,
**dadurch gekennzeichnet,**
**daß** die Bedieneinheit (8) eine Fernbedienung ist.

14. Schaltungsanordnung nach einem der Ansprüche 9 bis 13,
**dadurch gekennzeichnet,**
**daß** der Teilbereich (5) der Anzeigeeinheit (4) mittels der Bedieneinheit (8) vergrößert und verkleinert werden kann.

15. Schaltungsanordnung nach einem der Ansprüche 9 bis 14,
**dadurch gekennzeichnet,**
**daß** die Steuereinheit (1) die in der Speichereinheit (3) gespeicherten Videotextdaten turnusmäßig durchsucht,
**daß** eine weitere Empfangseinheit angeordnet ist und die Steuereinheit (1) mittels dieser Empfangseinheit den Empfangsbereich nach Fernsehsendern mit Videotextdaten im Nextview-Format durchsucht oder einen Fernsehsender, welcher Videotextdaten im Nextview-Format ausstrahlt, ständig überwacht und daß die Steuereinheit (1) die Daten in der Speichereinheit (3) anhand gefundener Fernsehsender mit Videotextdaten im Nextview-Format ständig aktualisiert.

## Claims

1. Method for selecting television programmes using teletext data, wherein
the teletext data are transmitted together with the television signal of a television station,
the teletext data contain information items relating to current television programmes of various television stations,
the teletext data are received by a television receiving unit together with the signal of a television station,
the teletext data are evaluated,
the evaluated teletext data are stored,
the stored teletext data are displayed line by line on a subarea of a display unit, sorted according to station names,
the data displayed on the subarea of the display unit are selected by means of an operating unit,
a television station can be selected using a generated selection bar on the display unit,
the name of said station is determined from the stored teletext data using a station selected by means of the selection bar and said name of the television station is sought in a program memory and, if said name of the station is present in the program memory, the transmission channel data that are associated with said television station and that are stored in a further memory unit are determined from the program memory,
the television receiving unit is set to said television channel in order to receive said television station, and the television programme associated with the selected name of the station is displayed in a further subarea of the display unit,
the instant in time of the storage is stored for the teletext data and the data in the memory unit are updated using the teletext data.

2. Method according to Claim 1, **characterized in that** the teletext data are transmitted in the next view format and **in that** the teletext data are transmitted as a teletext page, with subpages for a plurality of television stations.

3. Method according to Claim 1 or 2, **characterized in that** the teletext data are stored in a memory unit.

4. Method according to any of Claims 1 to 3, **characterized in that** the subareas of the display unit for displaying the teletext data and for displaying the television picture are not superimposed.

5. Method according to any of Claims 1 to 4, **characterized in that** a subarea of the display unit having a width of forty characters is used to display the teletext data.

6. Method according to any of Claims 1 to 5, **characterized in that** a scroll bar is displayed next to the subarea of the display unit in which the teletext data are displayed.

7. Method according to any of Claims 1 to 6, **characterized in that** the teletext data in the subarea of the display unit are displayed, sorted alphabetically according to the name of the television station and **in that** at least one line is used for display of a television station.

8. Method according to any of Claims 1 to 7, **characterized in that** the teletext data in the memory unit are updated in rotation.

9. Circuit arrangement for selecting television programmes using teletext data, comprising a control unit (1) a receiver unit (2), a memory unit (3), an operating unit (8) and a display unit (4) that has subareas (5, 6, 7), wherein
the receiver unit (2) receives teletext data that are transmitted together with the television signal,
the control unit (1) evaluates the teletext data and stores them in the memory unit (3),
the control unit (1) displays teletext data containing information items about various television stations on the display unit (4) in a subarea (7) sorted alphabetically according to station and uses a line for each television station displayed,
the control unit (1) generates, in the subarea (7) of the display unit (4), a selection bar (9) that focuses a respective line in the subarea (7),
the selection bar (9) can be displaced vertically line by line by means of the operating unit (8),
the control unit (1) determines from the teletext data in the memory unit (3) the name of a television station that is focused by means of the selection bar and searches for the name of said television station in a program memory (11) and, if said television station is present in the program memory (11), reads the transmission channel associated with said station out of the program memory and the control unit (1) activates the receiver unit (2) so that the latter switches over to said transmission channel, and the control unit (1) now displays the television signal received by the receiving unit (2) in a second subarea (5) of the display unit (4),
the control unit (1) stores the memory instant in time relating to the teletext data in the memory unit (3) and the control unit (1) monitors the teletext data that are received and continuously stores them in the memory unit (3).

10. Circuit arrangement according to Claim 9, **characterized in that** the teletext data are teletext data in next-view format and **in that** the control unit detects if teletext data are present in the next view format and processes only such teletext data.

11. Circuit arrangement according to Claim 9 or 10, **characterized in that** the memory unit (3) is implemented as a RAM memory and the program memory (11) is implemented as an E²PROM.

12. Circuit arrangement according to any of Claims 9 to 11, **characterized in that**, in the subarea (6) of the display unit (4), a picture scroll bar is displayed that indicates by means of a symbol (10) the point at which the selection bar (9) is situated in a third subarea (7) of the display unit (4) relative to the entire content displayed in the subarea (7).

13. Circuit arrangement according to any of Claims 9 to 12, **characterized in that** the operating unit (8) is a remote control.

14. Circuit arrangement according to any of Claims 9 to 13, **characterized in that** the subarea (5) of the display unit (4) can be enlarged or reduced by means of the control unit (8).

15. Circuit arrangement according to any of Claims 9 to 14, **characterized in that** the control unit (1) searches the teletext data stored in the memory unit (3) in rotation, **in that** a further receiving unit is provided and the control unit (1) searches the receiving area for television stations having teletext data in the next view format by means of said receiving unit or continuously monitors a television station that broadcasts teletext data in next view format, and **in that** the control unit (1) continuously updates the data in the memory unit (3) using television stations found with teletext data in the next view format.

## Revendications

1. Procédé de sélection de programmes de télévision à l'aide de données vidéotexte selon lequel
les données vidéotexte sont transmises conjointement avec le signal de télévision d'un émetteur de télévision, les données vidéotexte contenant des informations concernant des programmes de télévision réels de différents émetteurs de télévision,
les données vidéotexte d'un récepteur de télévision étant reçues conjointement avec le signal d'un émetteur de télévision,
les données vidéotexte étant évaluées,
les données vidéotexte évaluées étant mises en mémoire, les données vidéotexte mémorisées sur une partie d'une unité d'affichage, triées selon les noms des émetteurs, étant représentées ligne par ligne,
les données représentées sur la partie de l'unité d'affichage étant sélectionnées par l'intermédiaire d'une unité de commande,
un émetteur de télévision pouvant être sélectionné à l'aide d'une barre de sélection générée sur l'unité d'affichage,
à l'aide d'un émetteur sélectionné par l'intermédiaire de la barre de sélection, le nom de cet émetteur étant détecté à partir des données vidéotexte mémorisées et étant recherché dans une mémoire de programme selon ce nom de l'émetteur de télévision, et lorsque ce nom de l'émetteur se trouve dans une mémoire de programme, à partir de la mémoire de programme sont détectées les données de canal d'émission appartenant à cet émetteur de télévision, qui sont mémorisées dans une autre unité de mémoire,
le récepteur de télévision étant réglé sur ce canal de télévision afin de recevoir cet émetteur de télévision, et le programme de télévision appartenant au nom choisi de l'émetteur étant représenté dans une autre partie de l'unité d'affichage,
l'instant de la mémorisation étant prélevé des données vidéotexte et les données dans l'unité de mémoire étant actualisées à l'aide des données vidéotexte.

2. Procédé selon la revendication 1, **caractérisé en ce que** les données vidéotexte sont transmises au format Nextview et **en ce que** les données vidéotexte sont transmises comme une page vidéotexte, avec des sous-pages pour plusieurs émetteurs de télévision.

3. Procédé selon la revendication 1 ou 2, **caractérisé en ce que** les données vidéotexte sont mémorisées dans une unité de mémoire.

4. Procédé selon une des revendications 1 à 3, **caractérisé en ce que** les parties de l'unité d'affichage en vue de la représentation des données vidéotexte et en vue de la représentation de l'image de télévision ne se recouvrent pas.

5. Procédé selon l'une des revendications 1 à 4, **caractérisé en ce qu'**en vue de la représentation des données vidéotexte est utilisée une partie de l'unité d'affichage avec une largeur de 40 signes.

6. Procédé selon l'une des revendications 1 à 5, **caractérisé en ce qu'**en plus de la partie de l'unité d'affichage, dans laquelle sont représentées les données vidéotexte, est représentée une bande de défilement.

7. Procédé selon une des revendications 1 à 6, **caractérisé en ce que** les données vidéotexte sont représentées triées alphabétiquement selon les noms des émetteurs de télévision, **en ce qu'**au moins une ligne est utilisée en vue de la représentation d'un émetteur de télévision.

8. Procédé selon l'une des revendications 1 à 7, **caractérisé en ce que** les données vidéotexte dans l'unité de mémoire sont actualisées à tour de rôle.

9. Circuit de sélection de programmes de télévision à l'aide de données vidéotexte comprenant une unité de commande (1), un récepteur (2), une mémoire (3), une unité de commande (8) et une unité d'affichage (4), qui présente des parties (5, 6, 7), dans lequel
le récepteur (2) reçoit des données vidéotexte, qui sont transmises conjointement avec un signal d'émetteur de télévision, l'unité de commande (1) évalue les données vidéotexte et les mémorise dans l'unité de mémoire (3),
l'unité de commande (1) représente triées alphabétiquement selon les émetteurs sur l'unité d'affichage (4) dans une partie (7) les données vidéotexte, qui contiennent des informations concernant différents émetteurs de télévision et pour chaque émetteur de télévision représenté utilise une ligne,
l'unité de commande (17) génère dans la partie (7) de l'unité d'affichage (4) une barre de sélection (9), qui concentre respectivement une ligne de la partie (7),
la barre de sélection (9) pouvant être décalée ligne par ligne, verticalement par l'intermédiaire de l'unité de commande (8),
l'unité de commande (1) détecte à partir des données vidéotexte de l'unité de mémoire (3) le nom d'un émetteur de télévision, qui est concentré à l'aide de la barre de sélection (9) et recherche dans une mémoire de programmes (11) selon le nom de cet émetteur de télévision et, lorsque cet émetteur de télévision est présent dans la mémoire de programmes (11), lit à partir de la mémoire de programme le canal d'émission appartenant à cet émetteur et l'unité de commande (1) commande le récepteur (2), de manière à commuter celui-ci sur ce canal d'émission, et l'unité de commande (1) représente le signal de télévision reçu par le récepteur (2) dans une seconde partie (5) de l'unité d'affichage (4),
l'unité de commande (1) mémorise dans l'unité de mémoire (3) pour les données vidéotexte l'instant de mise en mémoire et l'unité de commande (1) surveille et mémorise en permanence dans l'unité de mémoire (3) les données vidéotexte, qui sont reçues.

10. Circuit selon la revendication 9, **caractérisé en ce qu'**il s'agit dans le cas des données vidéotexte de données vidéotexte au format Nextview, **en ce que** l'unité de commande (1) reconnaît lorsque des données vidéotexte sont présentes dans le format Nextview et traite uniquement ces données vidéotexte.

11. Circuit selon la revendication 9 ou 10, **caractérisé en ce que** l'unité de mémoire (3) est réalisée en tant que mémoire RAM et la mémoire de programmes (11) en tant que E²PROM.

12. Circuit selon une des revendications 9 à 11, **caractérisé en ce que** dans la partie (6) de l'unité de mémoire (4) est représentée une bande de défilement d'image, qui indique au moyen d'un symbole (10) en quel endroit se trouve la plage de sélection (9) dans une troisième partie (7) de l'unité d'affichage (4), par rapport au contenu total représenté dans la partie (7).

13. Circuit selon une des revendications 9 à 12, **caractérisé en ce que** l'unité de commande (8) est une télécommande.

14. Circuit selon une des revendications 9 à 13, **caractérisé en ce que** la partie (5) de l'unité d'affichage (4) peut être agrandie et réduite à l'aide de l'unité de commande (8).

15. Circuit selon une des revendications 9 à 14, **caractérisé en ce que** l'unité de commande (1) recherche à tour de rôle les données vidéotexte mémorisées dans l'unité de mémoire (3), **en ce qu'**un autre récepteur est prévu et **en ce que** l'unité de commande (1) recherche à l'aide de ce récepteur la plage de réception selon des émetteurs de télévision avec des données vidéotexte au format Nextview ou surveille en permanence un émetteur de télévision qui rayonne des données vidéotexte au format Nextview et **en ce que** l'unité de commande (1) actualise en permanence les données dans l'unité de mémoire (3) à l'aide de l'émetteur de télévision trouvé avec des données vidéotexte au format Nextview.
